# EUROPÄISCHE PATENTSCHRIFT

(11) **EP 0 886 873 B1**
(45) Veröffentlichungstag und Bekanntmachung des Hinweises auf die Patenterteilung: **17.05.2000**
(21) Anmeldenummer: 97920501.0
(22) Anmeldetag: 08.03.1997
(51) Int. Cl.: H01C 10/38, G01D 5/165

(54) **POSITIONSSENSOR**
POSITION SENSOR
DETECTEUR DE POSITION

(30) Priorität: 13.03.1996 DE 19609897; 13.03.1996 DE 29604673 U
(43) Veröffentlichungstag der Anmeldung: 30.12.1998
(73) Patentinhaber: HORST SIEDLE GmbH & Co. KG., 78120 Furtwangen (DE)
(72) Erfinder: MASEK, Ivan, D-70565 Stuttgart (DE); UTZ, Rainer, D-73760 Ostfildern (DE)
(74) Vertreter: Otte, Peter, Dipl.-Ing.
(86) Internationale Anmeldenummer: DE9700456
(87) Internationale Veröffentlichungsnummer: WO9734308

(56) Entgegenhaltungen:
- DE-A- 2 516 874
- DE-A- 4 428 273

## Beschreibung

Die Erfindung betrifft einen Positionssensor mit den Merkmalen des Oberbegriffs von Anspruch 1.

Die Führung kann z. B. so ausgebildet sein, daß der Schlitten gleitverschieblich geführt ist.

Die Meßsonde kann sowohl ein berührungsloses Abgriffselement als auch ein berührungsbehaftetes Abgriffselement, beispielsweise ein Schleifer o. dgl., sein.

Derartige Positionssensoren sind aus den unterschiedlichsten Bereichen der Technik bekannt. Sie werden beispielsweise als lineare Wegaufnehmer zur Positionsbestimmung verwendet. Sehr häufig sind die Positionssensoren dabei lineare Wegaufnehmer, die auf potentiometrischer, kapazitiver oder induktiver Basis arbeiten.

Aus der DE-26 29 294 A1 ist beispielsweise ein lineares veränderliches Widerstandsaggregat bekannt, bei dem die Meßsonde und ein Gleitschlitten starr miteinander verbunden sind, wobei der Gleitschlitten von außen über einen Griff gleitverschieblich verschiebbar ist und die Meßsonde Abgriffsklemmen sind, die auf einer Widerstandsbahn entlanggleiten.

Aus der DT-24 33 405 B2 ist ein einstellbarer Schiebewiderstand bekannt, bei dem die Meßsonde ebenfalls ein Abgriffselement darstellt, welches auf einer Widerstandsbahn entlanggleitet und mit einem an dem Gehäuse angeordneten Gleitschlitten starr verbunden ist.

Aus der DT 25 16 874 A1 geht ein Positionssensor hervor, bei dem der Meßsondenträger separat von dem Schlitten und der Schlittenführung angeordnet ist.

Ein Griffteil ist mit einem Schleiferfederträger über zwei Betätigungszapfen verbunden. Durch diese beiden Beätigungszapfen wird eine Einleitung von senkrecht zur Verschiebungsrichtung wirkenden Kräften nicht verhindert.

Problematisch bei sämtlichen bekannten Positionssensoren ist es, daß zwischen dem Schlitten und der Meßsonde entweder eine starre Verbindung besteht oder eine Verbindung, welche Kräfte senkrecht zur Bewegungsrichtung ermöglicht.

Durch die Einleitung von Querkräften, d.h. Kräften die quer zur Verschiebungsrichtung wirken auf die Meßsonde, beispielsweise ein Abgriffselement, das auf einer Widerstandsbahn gleitet, werden auf das Abgriffselement und die Widerstandsbahn Kräfte und Drehmomente übertragen, die nicht nur zu Störungen beim Betrieb des Positionssensors führen können, sondern insbesondere auch den Verschleiß wesentlich erhöhen und dadurch die Lebensdauer des gesamten Positionssensors erheblich verkürzen.

Der Erfindung liegt daher die Aufgabe zugrunde, einen Positonssensor der gattungsgemäßen Art derart zu verbessern, daß dieser bei möglichst einfacher Herstellung einen störungsfreien und funktionssicheren Betrieb bei einer langen Lebensdauer gewährleistet. Insbesondere soll vermieden werden, daß sich durch am Schlitten wirkende Kippmomente und Querkräfte die eng definierte Abstandstoleranz zwischen den Abgriffselementen und der Widerstandsbahn ändert. Darüber hinaus soll generell ein Verschleiß der Meßsonde durch solche äußere Einwirkungen vermieden werden.

Diese Aufgabe wird bei einem Positionssensor der eingangs beschriebenen Art erfindungsgemäß durch die Merkmale des kennzeichnenden Teils des Anspruchs 1 gelöst.

Durch den zusätzlichen Meßsondenträger, der getrennt von dem Schlitten und der Schlittenführung in dem Gehäuse verschieblich geführt ist, wird eine von der Schlittenführung unabhängige Führung der Meßsonde an dem Meßsondenträger und hierdurch die Kopplung des Meßsondenträgers an den Schlitten und die Schlittenführung ermöglicht, derart, daß eine Kraft ausschließlich parallel zur Verschiebungsrichtung übertragbar ist, ermöglicht. Durch diese Kopplung des Meßsondenträgers an den Schlitten und die Schlittenführung wird einerseits eine präzise Mitnahme des Meßsondenträgers und damit der Meßsonde durch den Schlitten erzielt, andererseits wird verhindert, daß jegliche nicht in Verschiebungsrichtung einwirkenden Querkräfte und Momente auf die Meßsonde übertragen werden und hierdurch Störungen beim Betrieb des Positionssensors hervorgerufen werden können, oder daß gar die Meßsonde und damit der gesamte Positionssensor beschädigt und so die Lebensdauer des Positionssensors verringert wird.

Der Meßsondenträger wird mit dem Schlitten und der Schlittenführung gekoppelt wobei hinsichtlich der Herstellungskosten und eines langen störungsfreien Betriebs von Vorteil ist, daß an dem Meßsondenträger eine Führungsplatte mit einem im wesentlichen senkrecht zur Verschiebungsrichtung verlaufenden Langloch angeordnet ist, in welches ein mit dem Schlitten verbundener Mitnehmerstift, dessen Durchmesser dem Durchmesser des Langlochs im wesentlichen entspricht, eingreift. Durch das Langloch und den Mitnehmerstift wird ermöglicht, daß eine Kraftübertragung von dem Schlitten auf den Meßsondenträger und damit die Meßsonde nur in Verschiebungsrichtung erfolgen kann, wohingegen seitlich, insbesondere senkrecht zur Verschiebungsrichtung auf den Schlitten einwirkende Querkräfte und Drehmomente nicht auf den Meßsondenträger übertragen werden, da leichte Verkippungen des Schlittens, die zu Verkippungen des Mitnehmerstiftes in dem Langloch führen, keinerlei Kraft auf den Meßsondenträger ausüben können.

Prinzipiell könnte die Führungsplatte an einer beliebigen Stelle an dem Meßsondenträger angeordnet werden. Besonders vorteilhaft ist es jedoch, wenn die Führungsplatte im wesentlichen im Schwerpunkt des Meßsondenträgers angeordnet ist, da hierdurch ein zentrischer Kraftangriff am Meßsondenträger ermöglicht wird, bei dem jegliches Kippmoment, wie es beispielsweise bei einem exzentrischen Kraftangriff an dem Meßsondenträger auftreten kann, und hierdurch auch eine Erhöhung der Reibung und des Verschleißes durch dieses Kippmoment vermieden werden.

Hinsichtlich der Ausbildung der beweglichen Anordnung des Meßsondenträgers in dem Gehäuse sind die unterschiedlichsten Ausführungen denkbar. So kann der Meßsondenträger beispielsweise wenigstens zwei Gleitfüße aufweisen, die in zu diesen komplementär ausgebildeten, in dem Gehäuse angeordneten Ausnehmungen verschieblich sind.

Vorzugsweise weist der Meßsondenträger vier Gleitfüße auf, da hierdurch zum einen besonders gute Gleiteigenschaften erzielt werden, zum anderen zusätzlich eine Verkippung des Meßsondenträgers verhindert wird.

Ein gewisser Verschleiß kann bei jeglicher Art von Gleitführung prinzipiell nie vollständig ausgeschlossen werden. Durch einen solchen Verschleiß entsteht und/oder erhöht sich mit der Zeit beispielsweise das Spiel zwischen den Gleitfüßen und den Ausnehmungen in dem Gehäuse, so daß hieraus eine unpräzise Führung des Meßsondenträgers in dem Gehäuse resultieren kann. Um dieses im Laufe der Zeit zunehmende Lagerspiel ausgleichen zu können, sind die Gleitfüße vorteilhafterweise auf wenigstens einer Seite federnd vorgespannt angeordnet, so daß eine Zunahme des Lagerspiels kontinuierlich ausgeglichen wird.

Die Meßsonden können in unterschiedlichster Art und Weise ausgebildet und mit dem Meßsondenträger verbunden sein.

Insbesondere hinsichtlich eines funktionssicheren und leicht herzustellenden Aufbaus ist die Meßsonde vorzugsweise einstückig mit dem Meßsondenträger verbunden und weist wenigstens ein Abgriffselement auf, das wenigstens einer in dem Gehäuse angeordneten Abgriffsbahn gegenüberliegt.

Die Meßsonde, der Meßsondenträger und das mit ihm verbundene Abgriffselement können rein prinzipiell auf die unterschiedlichste Art und Weise ausgebildet sein.

Das Abgriffselement kann beispielsweise im Falle eines potentiometrischen Positionssensors auf der Abgriffsbahn gleiten oder schleifen. In diesem Falle bildet der Meßsondenträger einen Schleiferträger mit einem als Schleifer ausgebildeten Abgriffselement.

Möglich ist es aber auch, daß zum berührungslosen Abgriff zwischen dem Abgriffselement und der Abgriffsbahn ein Luftspalt angeordnet ist. Dies ist beispielsweise bei einem kapazitiven oder induktiven Positionssensor der Fall.

Weitere Merkmale und Vorteile der Erfindung sind Gegenstand der nachfolgenden Beschreibung sowie der zeichnerischen Darstellung eines Ausführungsbeispiels.

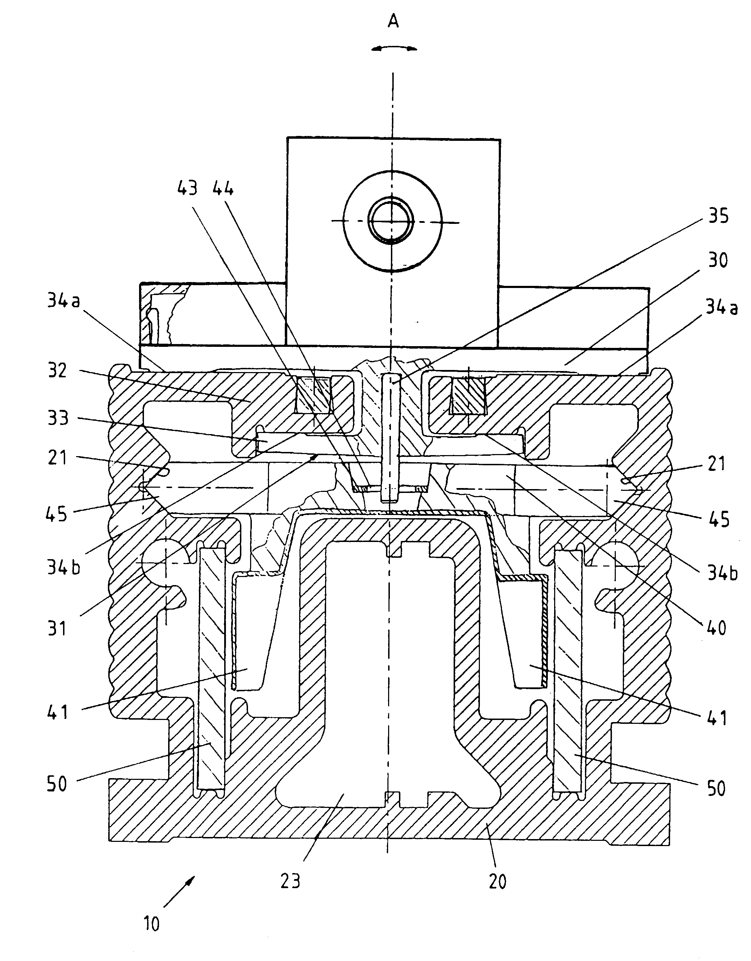

In der Zeichnung ist schematisch eine Teilschnittdarstellung eines erfindungsgemäßen Positionssensors dargestellt.

Wie aus der Zeichnung hervorgeht, umfaßt ein Positionssensor 10 ein Gehäuse 20, in dem ein Schlitten in Form eines Gleitschlittens 30 durch eine Gleitschlittenführung 31 gleitverschieblich geführt ist. Die Gleitschlittenführung 31 kann dabei wie in der Zeichnung dargestellt, beispielsweise ein einem Doppel-T-Träger ähnliches Trägerelement 33 umfassen, in das einstückig am Gehäuse ausgebildete Vorsprünge 32 eingreifen. Dabei können die Auflageflächen des Trägerelementes 33 nur an einigen wenigen vorbestimmten Stellen auf den Vorsprüngen 32 aufliegen, wie es anhand der Flächen 34a und 34b in der Zeichnung exemplarisch dargestellt ist. Diese Art der Gleitschlittenführung 31 gewährleistet bei einfacher Herstellung und einfachem Aufbau eine präzise Führung des Gleitschlittens 30 in Verschiebungsrichtung, d.h. in der Figur senkrecht zur Zeichnungsebene.

Wie aus der Zeichnung weiter hervorgeht, ist am unteren Ende der Gleitschlittenführung 31 ein Meßsondenträger 40 angeordnet, an dem einstückig Abgriffselemente 41 angeordnet sind. In dem Gehäuse 20 sind den Abgriffselementen 41 gegenüberliegend Abgriffsbahnen 50 befestigt.

Der Meßsondenträger 40 weist vier Gleitfüße 45 auf, die in zu den Gleitfüßen komplementär ausgebildeten, in dem Gehäuse 20 angeordneten Ausnehmungen 21 verschieblich sind.

Dabei sind die Gleitfüße 45 auf wenigstens einer Seite federnd vorgespannt angeordnet, so daß sich bei einer durch Verschleiß hervorgerufenen Änderung des Lagerspiels eine selbsttätige Nachstellung des Lagerspiels ergibt. Hierdurch wird über einen langen Zeitraum eine störungsfreie und präzise Führung des Meßsondenträgers 40 in dem Gehäuse 20 und damit ein störungsfreier Betrieb des gesamten Positionssensors 10 gewährleistet.

Im Zentrum des Meßsondenträgers 40 ist eine Führungsplatte 43 angeordnet, welche ein im wesentlichen senkrecht zur Verschiebungsrichtung verlaufendes Langloch 44 aufweist, in welches ein kreiszylindrischer, an dem Gleitschlitten 30 befestigter Mitnehmerstift 35, dessen Durchmesser dem Durchmesser des Langlochs 44 im wesentlichen entspricht, eingreift.

Durch diese Art und Weise der Kopplung des Meßsondenträgers 40 an den Gleitschlitten 30 wird zum einen eine präzise Mitnahme des Meßsondenträgers 40 in Verschiebungsrichtung (in der Figur senkrecht zur Zeichenblattebene) gewährleistet, andererseits wird verhindert, daß quer zur Verschiebungsrichtung auftretende Seitenkräfte zu einer Verkippung des Meßsondenträgers 40 und damit der Meßsonde, d.h. der Abgriffselemente führen und hierdurch den Verschleiß der Meßsonde erhöhen können. Diese Anordnung ist beispielsweise auch mit einem Spielausgleich zwischen dem Mitnehmerstift 35 und dem Langloch 44 im Meßsondenträger 40 denkbar, der über eine am Meßsondenträger 40 angeordnete (nicht dargestellte) Blattfeder, die in Bewegungsrichtung des Gleitschlittens 30 wirkt und gegen den Mitnehmerstift 35 drückt, realisiert ist.

Sämtliche Verkippungen quer zur Verschiebungsrichtung, die zu einer leichten Verkippung des Gleitschlittens 30 führen, bewirken nämlich lediglich eine leichte Verkippung des Mitnehmerstifts 35 in dem Langloch 44, wodurch jedoch keinerlei Kräfte auf den Meßsondenträger 40 ausgeübt werden. Solche möglichen Verkippungen sind in der Zeichnung anhand der Pfeile A übertrieben dargestellt.

Besonders vorteilhaft ist es auch, daß die Führungsplatte 43 im wesentlichen im Schwerpunkt des Meßsondenträgers 40 angeordnet ist, da hierdurch zusätzlich jegliche Art von Verkippung, die beispielsweise durch ein auf den Gleitschlitten 30 ausgeübtes Drehmoment hervorgerufen werden könnten, vermieden werden. Es hat sich nämlich gezeigt, daß es bei einem exzentrischen Kraftangriff an dem Meßsondenträger bei Richtungswechseln, die ohnehin wegen des Gleit-/Haftreibungszustands eine erhöhte Belastung mit sich bringen, zu einem Kippmoment kommen kann, das die Reibung und den Verschleiß zusätzlich erhöht. Bei einem zentrischen Kraftangriff der dargestellten Art sind derartige Kippmomente ausgeschlossen.

In dem Gehäuse 20 können in dafür vorgesehenen Hohlräumen 23 ferner elektronische Schaltungseinrichtungen (nicht dargestellt) angeordnet werden, mit deren Hilfe die abgegriffenen Signale unmittelbar verarbeitet werden können.

Es versteht sich, daß ein derartiger Positionssensor die unterschiedlichsten Meßprinzipien verwenden kann. So kann er beispielsweise als Potentiometer ausgebildet sein, er kann aber auch in vorteilhafter Weise bei kapazitiven oder induktiven Meßverfahren zur Anwendung kommen.

## Patentansprüche

1. Positionssensor (10) mit einem Gehäuse (20), mit einem in einer Führung in dem Gehäuse (20) verschieblich geführten Schlitten (30) und mit wenigstens einer an dem Schlitten (30) angeordneten Meßsonde zum Übertragen eines Meßsignals in Abhängigkeit von der Position des Schlittens (30), wobei die Meßsonde einen in dem Gehäuse (20) verschieblich geführten, von dem Schlitten (30) und der Schlittenführung (31) getrennten Meßsondenträger (40) aufweist, der mit dem Schlitten (30) und der Schlittenführung (31) derart gekoppelt ist, daß eine Kraft auf den Meßsondenträger (40) ausschließlich parallel zur Verschiebungsrichtung übertragbar ist,
dadurch gekennzeichnet, daß an dem Meßsondenträger (40) eine Führungsplatte (43) mit einem im wesentlichen senkrecht zur Verschiebungsrichtung verlaufenden Langloch (44) angeordnet ist, in welches ein mit dem Schlitten (30) verbundener Mitnehmerstift (35), dessen Durchmesser dem Durchmesser des Langlochs (44) im wesentlichen entspricht, eingreift.

2. Positionssensor nach Anspruch 1, dadurch gekennzeichnet, daß die Führungsplatte (43) im wesentlichen im Schwerpunkt des Meßsondenträgers (40) angeordnet ist.

3. Positionssensor nach Anspruch 1 oder 2, dadurch gekennzeichnet, daß der Meßsondenträger (40) wenigstens zwei Gleitfüße (45) aufweist, die in zu diesen komplementär ausgebildeten, in dem Gehäuse angeordneten Ausnehmungen (21) verschieblich sind.

4. Positionssensor nach Anspruch 3, dadurch gekennzeichnet, daß der Meßsondenträger vier Gleitfüße (45) aufweist.

5. Positionssensor nach Anspruch 3 oder 4, dadurch gekennzeichnet, daß die Gleitfüße (45) auf wenigstens einer Seite federnd vorgespannt angeordnet sind.

6. Positionssensor nach einem der Ansprüche 1 bis 5, dadurch gekennzeichnet, daß die Meßsonde einstückig mit dem Meßsondenträger (40) verbunden ist, und daß die Meßsonde wenigstens ein Abgriffselement (41) umfaßt, das wenigstens einer in dem Gehäuse (20) angeordneten Abgriffsbahn (50) gegenüberliegt.

7. Positionssensor nach Anspruch 6, dadurch gekennzeichnet, daß das Abgriffselement (41) auf der Abgriffsbahn (50) gleitet oder schleift.

8. Positionssensor nach Anspruch 6, dadurch gekennzeichnet, daß zum berührungslosen Abgriff zwischen dem Abgriffselement (41) und der Abgriffsbahn (50) ein Luftspalt angeordnet ist.

## Claims

1. A position sensor (10) comprising a housing (20), a slide (30) displaceable in a guide in the housing (20) and at least one measuring head, arranged on the slide (30), for transmitting a measuring signal as a function of the position of the slide (30), wherein the measuring head has a measuring-head carrier (40) displaceable in the housing (20) and separate from the slide (30) and the slide guide (31) and connected to the slide (30) and the slide guide (31) in such a manner that a force is transmissible to the measuring-head carrier (40) exclusively parallel to the direction of displacement, characterised in that a guide plate (43), having a slot (44) extending substantially perpendicularly to the direction of displacement, is arranged on the measuring-head carrier (40), a driving pin (35), which is connected to the slide (30) and the diameter of which substantially corresponds to the diameter of the slot (44), engaging in the slot (44).

2. A position sensor according to claim 1, characterised in that the guide plate (43) is arranged substantially in the centre of gravity of the measuring-head carrier (40).

3. A position sensor according to claim 1 or 2, characterised in that the measuring-head carrier (40) has at least two sliding feet (45) displaceable in complementary recesses (21) arranged in the housing.

4. A position sensor according to claim 3, characterised in that the measuring-head carrier has four sliding feet (45).

5. A position sensor according to claim 3 or 4, characterised in that the sliding feet (45) are resiliently pretensioned on at least one side.

6. A position sensor according to any one of claims 1 to 5, characterised in that the measuring head is integrally connected to the measuring-head carrier (40), and in that the measuring head comprises at least one sensing element (41) arranged opposite at least one sensing path (50) arranged in the housing (20).

7. A position sensor according to claim 6, characterised in that the sensing element (41) glides or slides on the sensing path (50).

8. A position sensor according to claim 6, characterised in that an air gap is arranged between the sensing element (41) and the sensing path (50) for contactless sensing.

## Revendications

1. Détecteur de position (10), comprenant un boîtier (20), un coulisseau (30) se déplaçant dans un guidage à l'intérieur du boîtier (20), au moins une sonde de mesure montée dans le coulisseau et servant à transmettre un signal en fonction de la positon du coulisseau (30), cette sonde comportant, séparé du coulisseau (30) et du guidage (31) de celui-ci, un support de sonde (40) qui est accouplé au coulisseau (30) et au guidage de coulisseau (31) de manière qu'une force peut être transmise au support de sonde (40) exclusivement selon une direction parallèle à la direction de coulissement,
caractérisé en ce que
sur le support de sonde (40), est montée une plaque de guidage (43) avec un trou oblong (44) essentiellement perpendiculaire à la direction de coulissement, dans lequel est engagée une broche d'entraînement (35) reliée au coulisseau (30) et dont le diamètre correspond essentiellement à celui du trou oblong (44).

2. Détecteur de position selon la revendication 1,
caractérisé en ce que
la plaque de guidage (43) se trouve sensiblement au centre de gravité du support de sonde (40).

3. Détecteur de position selon l'une quelconque des revendications 1 ou 2,
caractérisé en ce que
le support de sonde (40) comporte au moins deux pieds glissants (45) qui peuvent coulisser dans des évidements de forme complémentaire à celle des pieds, pratiqués dans le boîtier.

4. Détecteur de position selon la revendication 3,
caractérisé en ce que
le support de sonde a quatre pieds glissants (45).

5. Détecteur de position selon l'une quelconque des revendications 3 ou 4,
caractérisé en ce que
les pieds glissants (45) sont montés avec précontrainte élastique sur au moins un côté.

6. Détecteur de position selon l'une quelconque des revendications 1 à 5,
caractérisé en ce que
la sonde de mesure est monobloc avec le support de sonde (40), cette sonde comprenant au moins un élément de détection (41) situé en face d'au moins une piste de détection (50) logée dans le boîtier (20).

7. Détecteur de position selon la revendication 6,
caractérisé en ce que
l'élément de prise (41) glisse ou traîne sur la piste de détection (50).

8. Détecteur de position selon la revendication 6,
caractérisé en ce que
pour réaliser une prise sans contact, il y a une fente d'air entre l'élément de détection (41) et la piste de détection (50) .
